# EUROPEAN PATENT SPECIFICATION

(11) **EP 0 329 425 B1**
(45) Date of publication and mention of the grant of the patent: **13.04.1994**
(21) Application number: 89301463.9
(22) Date of filing: 15.02.1989
(51) Int. Cl.: G11B 7/24, G11B 7/26, G11B 11/10

(54) **Optical recording medium and manufacturing method thereof**
Optisches Aufzeichnungsmedium und dessen Herstellungsverfahren
Milieu d'enregistrement optique et son procédé de fabrication

(30) Priority: 15.02.1988 JP 32123/88
(43) Date of publication of application: 23.08.1989
(73) Proprietor: SHARP KABUSHIKI KAISHA, Osaka 545 (JP)
(72) Inventor: Takahashi, Akira, Nara-shi Nara-ken (JP); Mieda, Michinobu, Tenri-shi Nara-ken (JP); Murakami, Yoshiteru, Nishinomiya-shi Hyogo-ken (JP); Nakayama, Junichiro, Shiki-gun Nara-ken (JP); Miyake, Tomoyuki, Tenri-shi Nara-ken (JP); Ohta, Kenji, Kitakatsuragi-gun Nara-ken (JP)
(74) Representative: Brown, Kenneth Richard

(56) References cited:
- EP-A- 0 155 452
- EP-A- 0 175 408
- FR-A- 2 306 496
- US-A- 4 179 532
- PATENT ABSTRACTS OF JAPAN vol. 10, no. 173 (P-469)(2229) 18 June 1986, & JP-A-61 024039 (PIONEER K.K.) 01 February 1986,

## Description

The present invention relates to an optical recording medium such as an optical disk, optical card or the like for optical recording, reproducing and/or erasing of information, and the manufacturing method thereof.

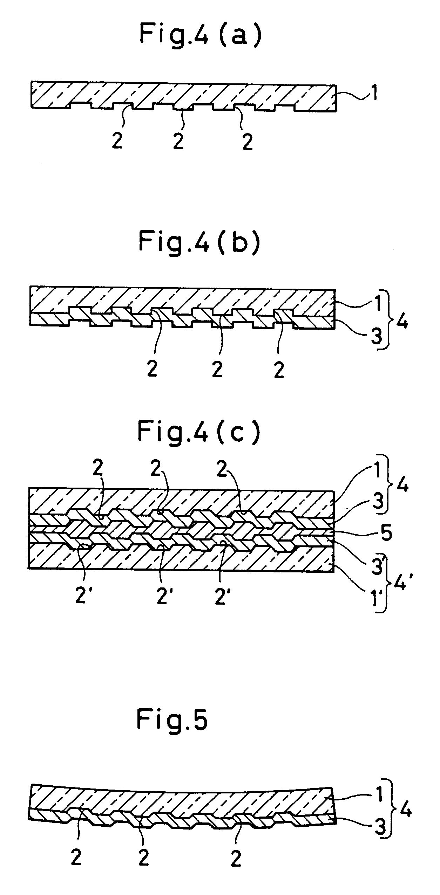

A common method of manufacturing an optical recording medium for recording, reproducing and/or erasing on both sides thereof comprises, as shown in Fig. 4(a), the steps of first forming recesses and/or protrusions 2, such as grooves and pits on one side of a transparent substrate 1 and then integrally forming a recording film 3 to cover these recesses and/or protrusions, as shown in Fig. 4(b) to thus form an optical recording substrate 4. Thereafter, as shown in Fig. 4(c), an optical recording substrate 4' is formed in a like way and with their recording films 3, 3' opposed to each other, the optical recording substrates 4, 4' are bonded to each other by the use of an adhesive 5, for instance, an ultraviolet ray hardening resin.

The aforementioned substrates 1, 1' are, however, required to allow transmission of light for recording, reproducing and erasing information and since the recesses/protrusions 2, 2' have to be formed, there are various conditions or requirements for such substrates 1, 1'.

For instance, they are required to be (1) transparent, (2) optically isotropic and, in particular, small in birefringence, (3) flat with little indication of warping or waviness and (4) easy to form the recesses and/or protrusions. Furthermore, various requirements are made for the substrates 1, 1' also relating to the recording films 3, 3': for instance, they are required to have a high heat resistance if the method of forming the recording films 3, 3' requires heating, and if the films 3, 3' are required to be moisture-proof, they are required to have a low moisture permeability and low water absorption.

Recently, therefore, study has been made of the possibility of using as the aforementioned substrates 1, 1' those of polycarbonate resin made by injection moulding(hereinafter called "PC substrate").

Even the aforementioned PC substrate made by injection moulding tends to be high in birefringence and, when the recording film 3 is formed thereon to make it the optical recording substrate 4, it tends to warp with the side covered with the recording film 3 convex, as shown in Fig. 5. This phenomenon of the optical recording substrate 4 warping with the side covered with the recording film 3 convex is due to the difference in thermal expansion coefficient between the recording film 3 and the PC substrate 1 and, if the temperature is raised at the time of forming the recording film 3, the dimensions of the PC substrate 1 become smaller than those of the recording film 3.

Also, when an optical recording medium is made by bonding together the optical recording substrates 4, 4', such an optical recording medium is constantly subject to some degree of stress. When the optical recording medium so prepared is subjected to sudden changes in temperature, exfoliation of recording film 3 from substrate 1, or of each substrate 1, 1', takes place in the optical recording medium, this affecting the reliability of the optical recording medium.

In JP-A-61-24039 there is disclosed a manufacturing process for a double-sided information disc in which an aluminium foil is pressed between stampers to transfer thereto a recording signal pattern. Two transparent flat plates are then bonded to both sides of the foil by adhesive.

It is a primary object of the present invention to provide a highly reliable optical recording medium, substrates forming it being safe from warping and even when the optical recording medium as such is subjected to sudden changes in temperature or the like, there is no risk of exfoliation of a recording film et cetera, and a manufacturing method thereof.

Another object of the present invention is to provide a kind of optical recording medium which can be manufactured with emphasis on the optical quality or performance required of a transparent protective plate as well as its protective effect, the carrier-to-noise ratio and optical isotropy, in particular, and a manufacturing method thereof.

In a first aspect, the invention provides a double-sided optical recording medium comprising a centre substrate having recesses and/or protrusions formed on at least one side thereof, and respective transparent outer protective plates stuck to the substrate by means of intervening adhesive layers according to said JP-A-67-24039, characterised by recording layers formed on respective opposite sides of the centre substrate, said outer protective plates being stuck by said adhesive layers to the outer sides of the recording layers.

The aforementioned centre substrate may possibly be an injection-moulded sheet of polycarbonate (hereinafter called "PC") resin. It may also be a synthetic resin sheet formed by casting.

Meanwhile, the aforementioned transparent protective plate may possibly be an extrusion-moulded sheet of PC resin. It may also be made of glass.

Further, the aforementioned centre substrate and transparent protective plate may be formed of materials having similar thermal expansion coefficient.

Further still, the aforementioned centre substrate may be an injection-moulded PC resin sheet, while the transparent protective plate may be a PC resin sheet moulded by extrusion.

In a second aspect, the invention provides a method of manufacturing a double-sided optical recording medium, comprising preparing a centre substrate with recesses and/or protrusions formed on at least one side thereof, and sticking transparent outer protective plates to the substrate by means of intervening adhesive layers, characterised by the steps of forming recording films on both sides of said substrate, said outer protective plates being stuck by said adhesive layers to the outer sides of the recording films.

As the method of forming recesses and/or protrusions on the centre substrate in the manufacturing process of the aforementioned optical recording medium, it is also possible to form recesses and/or protrusions on both sides of the centre substrate simultaneously by the use of a pair of stampers attached to the die, at the time the centre substrate is formed by injection moulding.

Also, for forming recesses and/or protrusions on the centre substrate in the process of manufacturing the aforementioned optical recording medium, a method of first sheeting the material by extrusion moulding and then placing it between a pair of stampers attached to the dies and pressing from both sides to thereby form recesses and/or protrusions simultaneously, is available.

Fig. 1(a) is a vertically-sectioned front view of the centre substrate of an optical recording medium having formed on both sides thereof recesses and/or protrusions such as grooves.

Fig. 1(b) is another vertically-sectioned front view of the centre substrate of the optical recording medium having formed recording films on both sides thereof.

Fig. 1(c) is still another vertically-sectioned front view of the centre substrate of the optical recording medium with recording films formed on both sides thereof and transparent protective layers stuck to the recording films with each one layer of transparent adhesive therebetween.

Fig. 2 is a diagram showing the relationship between the length of optical recording bit and the carrier-to-noise ratio for the optical recording medium when, as the transparent protective plate, (1) glass base plate is used, (2) extrusion-moulded PC (polycarbonate) plate is used, and (3) injection-moulded PC plate is used, respectively.

Fig. 3 is another diagram showing the relationship between the rotation angle of the transparent protective plate and the difference in refractive index in the direction along the plate and the direction vertical thereto when, as the transparent protective plate, (1) extrusion-moulded PC plate is used and (2) injection-moulded PC plate is used, respectively.

Fig. 4(a) is a vertically-sectioned front view of the substrate of a conventional optical recording medium with recesses and/or protrusions such as grooves formed on one side thereof.

Fig. 4(b) is another vertically-sectioned front view of the substrate of the same conventional optical recording medium with a recording film formed on the side with recesses and/or protrusions.

Fig. 4(c) is still another vertically-sectioned front view showing two stuck-together substrates of the conventional optical recording medium, each substrate having formed thereon a recording film.

Fig. 5 is a vertically-sectioned front view showing the warped substrate of the conventional optical recording medium.

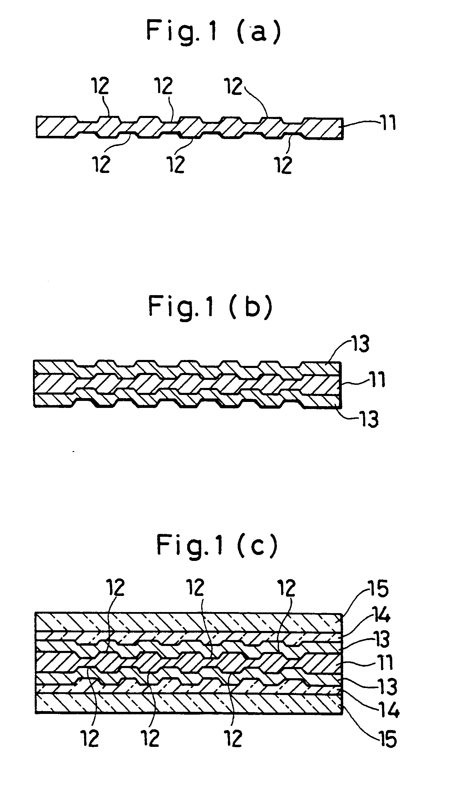

A preferred embodiment of the present invention is described below with reference being made to Figs. 1 through 3.

In the optical recording medium of the present invention, as shown in Fig. 1(c), a centre substrate 11 has formed on both sides thereof recesses and/or protrusions 12, such as grooves and pits, and recording films 13, 13 are formed integrally to cover these recesses and/or protrusions 12. On the recording films 13, 13 there are formed transparent adhesive layers 14, 14 and transparent protective plates 15, 15 are securely bonded thereby.

The process of manufacturing the optical recording medium described above comprises the steps of first forming recesses and/or protrusions 12, as shown in Fig. 1(a), and then forming the recording films 13, 13 by sputtering et cetera as shown in Fig. 1(b).

As recording films 13, 13, magneto-optical recording medium films formed as a laminate of four layers, namely Al/AlN/(Gd_{0.6} Tb _{0.4} ) _{0.28} Fe _{0.72}/AlN, et cetera is available. Of course, this means no limitation, and besides GdTbFe type as such, magneto-optical recording medium in film form made of some other material, or even a recording medium film of phase change type using Te (type utilizing crystalline-amorphous phase change), is available.

Then, a transparent adhesive is applied on the aforementioned recording films 13, 13 for formation of adhesive layers 14, 14, and the transparent protective plates 15, 15 are securely bonded thereby. As the aforementioned adhesive is applied an ultraviolet ray curing resin or the like.

According to the aforementioned composition, the recording films 13, 13 are formed on both sides of the centre substrate 11. Hence with the recording films 13, 13 formed on the centre substrate 11 warping of the centre substrate 11 can be prevented.

Since the recording films 13, 13 are equal or closely similar in thermal expansion coefficient, they are deemed equal in dimensional change due to changes in temperature. Hence, even if the dimensions of these recording films 13, 13 should be different from those of the above centre substrate 11, the force resulting from this difference in dimensions acts on the centre substrate 11 from both sides thereof at equal magnitudes. If forces of equal magnitudes act on both sides of the centre substrate 11, these forces are offset, this resulting in no warping of the aforementioned centre substrate 11.

As to the aforementioned transparent protective plates 15, 15, there is no necessity of forming the recesses and/or protrusions 12. It is, therefore, not necessary to take the ease of formation of recesses and/or protrusions into consideration. Hence, the range of materials to choose from, is that much increased, this enabling selection of materials with emphasis on optical performance and protective function required of the transparent protective plate 15.

Although in this embodiment, the recesses and/or protrusions 12 are formed on both sides of the center substrate 11, formation of the aforementioned recesses and/or protrusions 12 can be made by means of a pair of stampers attached to the die/s, in case the centre substrate 11 is a polycarbonate (hereinafter called "PC") substrate made by injection moulding.

This way, the trouble of doing centre alignment of grooves each time when two sheets of optical recording substrate are bonded together can be dispensed with. That is, by doing position adjustment of the aforementioned stamper in advance, centre alignment of grooves formed on both sides of the centre substrate is easily feasible and, moreover, if this centre alignment of grooves is done once, reproduced centre substrate 11 with grooves is bound to have the identical groove centre.

Thus, if the groove centre can be aligned on both sides, the equilibrium error possibly occurring when the optical recording medium is set on the player and rotated can be easily eliminated or minimized.

By the way, it is not always necessary that the aforementioned centre substrate 11 must be transparent, and as its material can be used, besides the aforementioned PC substrate, also ABS resin, melamine resin, glass, ceramics et cetera. As to the method of preparing the centre substrate 11, extrusion moulding, casting, et cetera are applicable in addition to injection moulding, and the epoxy resin plate or acrylic resin plate moulded by the casting method are well usable as materials of the centre substrate 11.

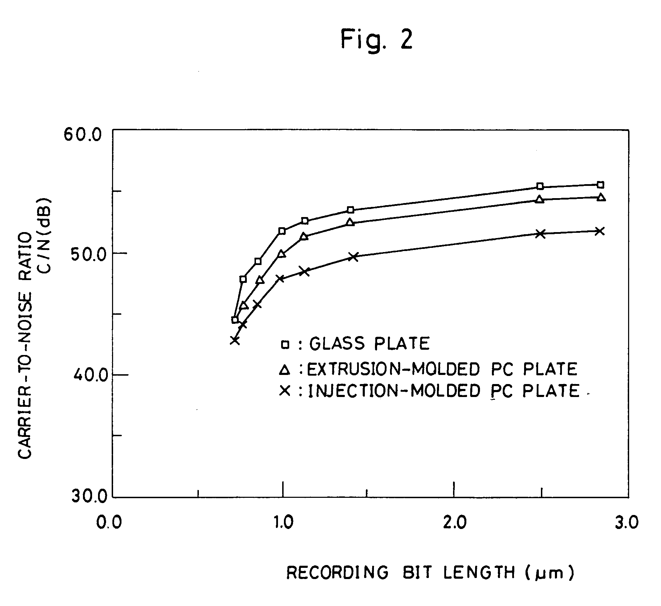

The signal quality of the optical recording medium, for instance, the relationship between the recording bit length and the carrier-to-noise ratio was measured using as the aforementioned transparent protective plates 15, 15 (1) glass plate, (2) extrusion-moulded PC plate and (3) injection-moulded PC plate, and the result was as shown in Fig. 2.

According to the measured data, the optical recording medium using an extrusion-moulded PC plate was comparable with that using glass plate in carrier-to-noise ratio, and the former turned out to be extremely suited as material of transparent protective plate 15. Meanwhile, the optical recording medium using injection-moulded PC plate was lower in carrier-to-noise ratio than that with glass plate, the former not necessarily suitable as the transparent protective plate 15.

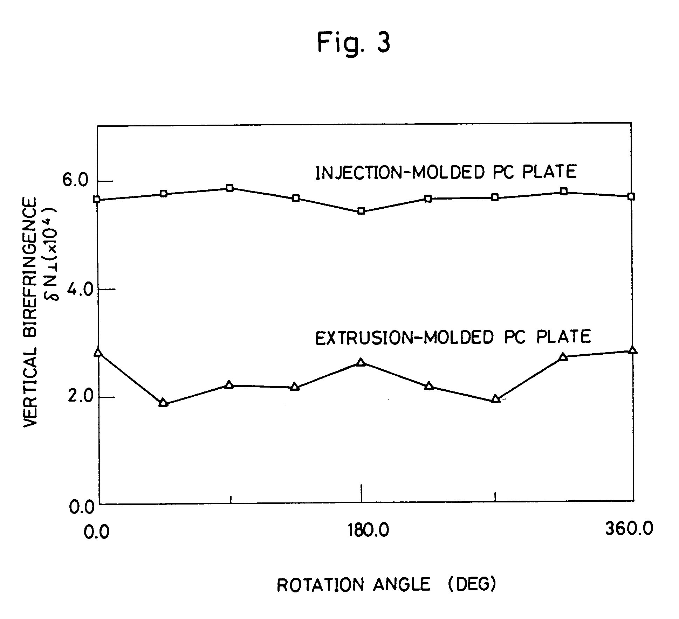

There is a difference between an extrusion-moulded PC plate and an injection-moulded counterpart also in a difference in refractive index in the direction along the plate and the direction vertical thereto (hereinafter called "vertical birefringence"), as shown in Fig. 3. That is, an extrusion-moulded PC plate is smaller in vertical birefringence, and superior in optical isotropy to an injection-moulded counterpart. With glass plate birefringence was practically unnoticeable.

Further, there is also a difference between an extrusion-moulded and injection-moulded PC plates in the ease of forming the recesses and/or protrusions 12, this being attributable to the difference in the method of manufacture. And in this respect an injection-moulded PC plate is superior, that is, easier for formation thereof than an extrusion-moulded counterpart.

For the reasons as described above, an ideal optical recording medium is obtainable by using an injection-moulded PC plate as the centre substrate 11, in which the recesses and/or protrusions are formed, and by using an extrusion-moulded PC plate as the transparent protective plate 15, 15, which is required to be superior in optical isotropy. This also contributes to the desired reduction in inside stress of the optical recording medium for an extrusion-moulded PC plate and an injection-moulded counterpart are similar in thermal expansion coefficient.

Needless to say, the aforementioned centre substrate 11 need not necessarily be an injection-moulded PC plate, and an extrusion-moulded counterpart may be used instead. In order to form the recesses and/or protrusions 12 in an extrusion-moulded PC plate, the PC plate is placed between a pair of patterned dies and then pressed inward from both sides. When the temperature is kept at approximately 100°C, the aforementioned recesses and/or protrusions 12, such as grooves, can well be transferred onto the plate.

The optical recording medium of the present invention need not necessarily be disk-shaped, and may be formed as a card or the like as well.

As described above, the present invention relates to an optical recording medium comprising a centre substrate with recesses and/or protrusions formed on at least one of its two sides and recording films formed on both sides of the centre substrate, and transparent protective plates of extrusion-moulded polycarbonate stuck to the recording films respectively.

The aforementioned centre substrate may possibly be of PC resin made by injection moulding.

This centre substrate may also be of a synthetic resin made by cast moulding.

The aforementioned transparent protective plate may possibly be of PC resin made by extrusion molding.

This transparent protective plate may also be of glass.

Further, the aforementioned centre substrate and transparent protective plate may possibly be made of materials similar in thermal expansion coefficient.

Further still, it is also possible to have the aforementioned centre substrate made of PC resin by injection moulding, while using a extrusion-moulded PC resin as the aforementioned transparent protective plate.

The method for manufacture of the aforementioned optical recording medium comprises the steps of first making the centre substrate having formed recesses and/or protrusions on at least one side thereof, then forming the recording films on both sides of the centre substrate, and thereafter sticking the transparent protective plates to the recording films respectively.

In the aforementioned process for manufacture of the optical recording substrate, the recesses and/or protrusions may possibly be formed on both sides of the centre substrate by means of a pair of stampers attached to the die in the course of injection moulding.

In the aforementioned manufacturing process the recesses and/or protrusions may also be formed on both sides of the centre substrate by first preparing a material plate by extrusion moulding, then placing it between a pair of dies and pressing inward from both sides.

This way, it is possible to obtain a highly reliable optical recording medium, which is prevented from warping of the substrates constituting the optical recording medium, and thus safe from exfoliation of the recording film or the like, even when the optical recording medium is subjected to sudden changes in temperature or the like.

Further, in selecting the transparent protective plate, emphasis may be placed on the optical performance and protective effect required of a transparent protective plate regardless of the ease of forming recesses and/or protrusions such as grooves. Hence a marked improvement in carrier-to-noise ratio, optical isotropy and the like can well be expected.

Further still, the relative positional precision of the recesses and/or protrusions formed on both sides of the centre substrate can be easily improved.

## Claims

1. A double-sided optical recording medium comprising a centre substrate (11) having recesses and/or protrusions (12) formed on at least one side thereof, and respective transparent outer protective plates (15) stuck to the substrate by means of intervening adhesive layers (14), characterised by recording layers (13) formed on respective opposite sides of the centre substrate (11), said outer protective plates (15) being stuck by said adhesive layers (14) to the outer sides of the recording layers.

2. An optical recording medium according to claim 1, wherein said centre substrate (11) is formed of injection-moulded polycarbonate resin.

3. An optical recording medium according to claim 1, wherein said centre substrate (11) is formed of cast-moulded synthetic resin.

4. An optical recording medium according to claim 1, wherein said outer protective plates (15) are formed of extrusion-moulded polycarbonate resin.

5. An optical recording medium according to claim 1, wherein said outer protective plates (15) are made of glass.

6. An optical recording medium according to claim 1, wherein said centre substrate (11) and said outer protective plates (15) are made of materials having similar thermal expansion coefficient.

7. An optical recording medium according to claim 6, wherein said centre substrate (11) is formed of injection-moulded polycarbonate resin and said outer protective plates (15) are formed of extrusion-moulded polycarbonate resin.

8. An optical recording medium according to any one of the preceding claims, wherein the inner faces of said outer protective plates (15) are substantially flat.

9. An optical recording medium according to any one of the preceding claims, wherein said recesses and/or protrusions (12) are grooves and/or pits.

10. An optical recording medium according to any one of the preceding claims which is disc-shaped.

11. A method of manufacturing a double-sided optical recording medium, comprising preparing a centre substrate (11) with recesses and/or protrusions (12) formed on at least one side thereof, and sticking transparent outer protective plates (15) to the substrate by means of intervening adhesive layers (14), characterised by the steps of forming recording films (13) on both sides of said substrate (11), said outer protective plates (15) being stuck by said adhesive layers (14) to the outer sides of the recording films.

12. The method of claim 11, wherein said centre substrate (11) is prepared by injection moulding and, in the course of said injection moulding, said recesses and/or protrusions (12) are formed simultaneously on both sides of the centre substrate by means of a pair of stampers attached to the die.

13. The method of claim 11, wherein said centre substrate (11) is prepared by first forming a plate of material by extrusion moulding, and then placing the plate between a pair of patterned dies and pressing inward from both sides to thereby form said recesses and/or protrusions (12) simultaneously on both sides of the centre substrate.

14. The method of any one of claims 11 to 13, wherein said centre substrate (11) is formed of polycarbonate resin.

15. The method of claim 11, wherein said centre substrate (11) is formed by cast moulding of synthetic resin.

16. The method of any one of claims 11 to 15, wherein the step of sticking said outer protective plates (15) to said recording films (13) comprises curing an adhesive resin (14) with ultraviolet light.

## Patentansprüche

1. Doppelseitiges optisches Aufzeichnungsmedium mit einem Trägersubstrat (11), bei dem auf mindestens einer Seite Vertiefungen und/oder Erhöhungen (12) ausgebildet sind und mitjeweiligen transparenten äußeren Schutzschichten (15), die durch dazwischenliegende adhäsive Schichten (14) an dem Substrat befestigt sind, **gekennzeichnet durch** Speicherschichten (13), die auf jeweils gegenüberliegenden Seiten des Trägersubstrats (11) ausgebildet sind, wobei die äußeren Schutzschichten (15) durch die dazwischenliegenden adhäsive Schichten (14) an den Außenseiten der Speicherschichten (13) befestigt sind.

2. Optisches Aufzeichnungsmedium nach Anspruch 1, **dadurch gekennzeichnet**, daß das Trägersubstrat (11) durch Spritzgießen aus Polycarbonat-Kunststoff hergestellt ist.

3. Optisches Aufzeichnungsmedium nach Anspruch 1, **dadurch gekennzeichnet**, daß das Trägersubstrat (11) durch Gießen aus einem synthetischen Kunststoff hergestellt ist.

4. Optisches Aufzeichnungsmedium nach Anspruch 1, **dadurch gekennzeichnet**, daß die äußeren Schutzschichten (15) durch Extrusionsformen (Strangpressen) aus Polycarbonat-Kunststoff hergestellt sind.

5. Optisches Aufzeichnungsmedium nach Anspruch 1, **dadurch gekennzeichnet**, daß die äußeren Schutzschichten (15) aus Glas hergestellt sind.

6. Optisches Aufzeichnungsmedium nach Anspruch 1, **dadurch gekennzeichnet**, daß das Trägersubstrat (11) und die äußeren Schutzschichten (15) aus Materialien mit ähnlichen thermischen Ausdehnungskoeffizienten hergestellt sind.

7. Optisches Aufzeichnungsmedium nach Anspruch 6, **dadurch gekennzeichnet**, daß das Trägersubstrat (11) durch Spritzgießen aus Polycarbonat-Kunststoff und die äußeren Schutzschichten (15) durch Extrusionsformen aus Polycarbonat-Kunststoff hergestellt sind.

8. Optisches Aufzeichnungsmedium nach einem der vorstehenden Ansprüche, **dadurch gekennzeichnet**, daß die Innenflächen der äußeren Schutzschichten (15) im wesentlichen eben sind.

9. Optisches Aufzeichnungsmedium nach einem der vorstehenden Anspruche, **dadurch gekennzeichnet**, daß die Vertiefungen und/oder Erhöhungen (12) Rillen und/oder Pits sind.

10. Optisches Aufzeichnungsmedium nach einem der vorstehenden Ansprüche, **dadurch gekennzeichnet**, daß das Aufzeichnungsmedium scheibenförmig ausgebildet ist.

11. Verfahren zur Herstellung eines doppelseitigen optischen Aufzeichnungsmediums, mit der Erzeugung eines Trägersubstrats (11), bei dem auf mindestens einer Seite Vertiefungen und/oder Erhöhungen (12) ausgebildet sind, und dem Anbringen von transparenten äußeren Schutzschichten (15) auf dem Substrat mit Hilfe von dazwischenliegenden adhäsiven Schichten (14), **dadurch gekennzeichnet**, daß aufbeiden Seiten des Substrats (11) Speicherfilme (13) ausgebildet und die äußeren Schutzschichten (15) durch die adhäsiven Schichten (14) an den Außenseiten der Speicherschichten befestigt werden.

12. Verfahren nach Anspruch 11, **dadurch gekennzeichnet**, daß das Trägersubstrat (11) durch Spritzgießen hergestellt wird und daß während des Spritzgießens gleichzeitig auf beiden Seiten des Trägersubstrats die Vertiefungen und/oder Erhöhungen (12) durch ein Paar von an der Gußform befestigter Stempel geformt werden.

13. Verfahren nach Anspruch 11, **dadurch gekennzeichnet**, daß das Trägersubstrat (11) dadurch hergestellt wird, daß zunächst eine Platte aus dem Material durch Extrusionsformen (Strangpressen) hergestellt wird und die Platte dann zwischen ein Paar eine Struktur aufweisende Prägestempel gelegt wird, um dann durch Drücken von beiden Seiten gegeneinander die Vertiefungen und/oder Erhöhungen (12) gleichzeitig auf beiden Seiten des Trägersubstrats zu erzeugen.

14. Verfahren nach einem der Ansprüche 11 bis 13, **dadurch gekennzeichnet**, daß das Trägersubstrat (11) aus Polycarbonat-Kunststoff hergestellt wird.

15. Verfahren nach Anspruch 11, **dadurch gekennzeichnet**, daß das Trägersubstrat durch Gießen aus synthetischem Kunststoff hergestellt ist.

16. Verfahren nach einem der Ansprüche 11 bis 15, **dadurch gekennzeichnet**, daß der Verfahrensschritt des Befestigens der äußeren Schutzschichten an dem Speicherfilm (13) die Behandlung eines adhäsiven Kunststoffs (14) mit ultraviolettem Licht umfaßt.

## Revendications

1. Milieu d'enregistrement optique à double face comprenant un substrat central (11) ayant des creux et/ou des reliefs (12) formés sur au moins un de ses côtés, et des plaques de protection transparentes extérieures respectives (15) collées sur le substrat au moyen de couches adhésives intermédiaires (14), caractérisé par des couches d'enregistrement (13) formées sur les côtés opposés respectifs du substrat central (11), lesdites plaques de protection extérieures (15) étant collées par lesdites couches adhésives (14) aux côtés extérieurs des couches d'enregistrement.

2. Milieu d'enregistrement optique, conformément à la revendication 1, dans lequel ledit substrat central (11) est en résine de polycarbonate moulée par injection.

3. Milieu d'enregistrement optique, conformément à la revendication 1, dans lequel ledit substrat central (11) est en résine synthétique moulée par coulage.

4. Milieu d'enregistrement optique, conformément à la revendication 1, dans lequel lesdites plaques de protection extérieures (15) sont en résine de polycarbonate moulée par extrusion.

5. Milieu d'enregistrement optique, conformément à la revendication 1, dans lequel lesdites plaques de protection extérieures (15) sont en verre.

6. Milieu d'enregistrement optique, conformément à la revendication 1, dans lequel ledit substrat central (11) et lesdites plaques de protection extérieures (15) sont constitués de matériaux présentant un coefficient d'expansion thermique identique.

7. Milieu d'enregistrement optique, conformément à la revendication 6, dans lequel ledit substrat central (11) est en résine de polycarbonate moulée par injection et lesdites plaques de protection extérieures (15) sont en résine de polycarbonate moulée par extrusion.

8. Milieu d'enregistrement optique, conformément à n'importe quelle revendication précédente, dans lequel les faces intérieures des dites plaques de protection extérieures (15) sont substantiellement plates.

9. Milieu d'enregistrement optique, conformément à n'importe quelle revendication précédente, dans lequel les dits creux et/ou des reliefs (12) sont des rainures et/ou des piqûres.

10. Milieu d'enregistrement optique, conformément à n'importe quelle revendication précédente, qui est en forme de disque.

11. Procédé de fabrication d'un milieu d'enregistrement optique à double face, consistant à préparer un substrat central (11) avec des creux et/ou des reliefs (12) formés sur au moins un de ses côtés, et à coller des plaques de protection transparentes extérieures (15) sur le substrat au moyen de couches adhésives intermédiaires (14), caractérisé par les étapes de formation des films d'enregistrement (13) des deux côtés du dit substrat (11), lesdites plaques de protection extérieures (15) étant collées par lesdites couches adhésives (14) aux côtés extérieurs des films d'enregistrement.

12. Procédé selon la revendication 11, dans lequel ledit substrat central (11) est préparé par moulage par injection et, au cours du dit moulage par injection, les dits creux et/ou reliefs sont formés simultanément des deux côtés du substrat central au moyen d'une paire de poinçons attachés à la matrice.

13. Procédé selon la revendication 11, dans lequel ledit substrat central (11) est préparé en formant d'abord une plaque de matériau moulé par extrusion, et en plaçant ensuite la plaque entre une paire de matrices à empreintes et en la comprimant vers l'intérieur des deux côtés, pour former ainsi en même temps lesdits creux et/ou reliefs (12) des deux côtés du substrat central.

14. Procédé selon n'importe laquelle des revendications 11 à 13, dans lequel ledit substrat central (11) est en résine de polycarbonate.

15. Procédé selon la revendication 11, dans lequel ledit substrat central (11) est moulé par coulage de résine synthétique.

16. Procédé selon n'importe laquelle des revendications 11 à 15, dans lequel l'étape de collage des dites plaques de protection extérieures (15) aux dits films d'enregistrement (13) comprend le durcissement d'une résine adhésive (14) par lumière ultraviolette.
